# EUROPEAN PATENT APPLICATION

(11) **EP 4 319 153 A1**
(43) Date of publication of application: **07.02.2024**
(21) Application number: 21935181.4
(22) Date of filing: 10.12.2021
(51) Int. Cl.: H04N 19/105, H04N 19/172, H04N 19/31

(54) **VIDEO ENCODING DEVICE, VIDEO DECODING DEVICE, VIDEO ENCODING METHOD, VIDEO DECODING METHOD, AND VIDEO SYSTEM**

(30) Priority: 30.03.2021 JP 2021056391
(71) Applicant: NEC Corporation, 108-8001 Tokyo (JP)
(72) Inventor: TOKUMITSU, Kenta, Tokyo 108-8001 (JP); CHONO, Keiichi, Tokyo 108-8001 (JP)
(74) Representative: Betten & Resch
(86) International application number: PCT/JP2021/045639
(87) International publication number: WO 2022/209032

(57) **Abstract**

The video encoding device 10 includes prediction means 11 for performing a prediction process using intra-prediction or inter-prediction, and coding control means 12 for controlling the prediction means 11 so that under a predetermined condition that pictures in the later display order are not coded before pictures in the earlier display order and that pictures in lower layers do not refer to pictures in upper layers, the prediction means 11 uses a picture closest in the display order to a picture to be coded as a reference picture when coding the picture referring to a picture in the lower layer.

## Description

### Technical Field

This invention relates to a video encoding device, a video decoding device, a video encoding method, a video decoding method, and a video system.

### Background Art

In a video content distribution system, for example, a transmitter encodes a video signal based on the H.264/AVC (Advanced Video Coding) standard or the HEVC (High Efficiency Video Coding) standard, and a receiver performs a decoding process to reproduce the video signal.

Non-patent literature 1 introduces a concept of SOP (Structure of Pictures). The SOP is a unit describing the coding order and reference relationship of each AU (Access Unit) in the case of performing temporal scalable coding. The temporal scalable coding is such coding that enables a frame to be extracted partially from video of a plurality of frames. One GOP (Group of Pictures) comprises one or more SOPs.

Non-patent literature 1 specifies an SOP structure applicable to video formats other than 120/P (Progressive) and an SOP structure applicable to a video format of 120/P.

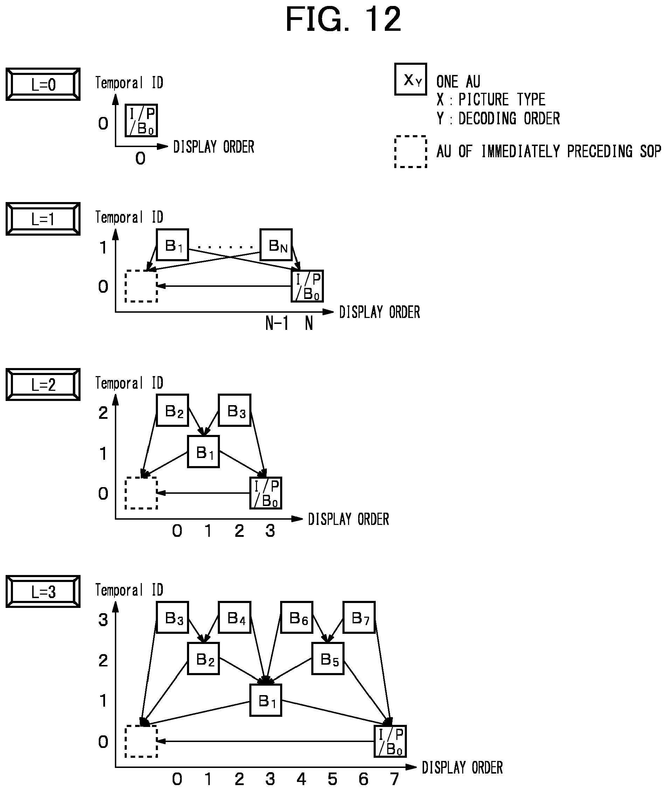

Fig. 12 is an explanatory diagram showing an SOP structure applied to video formats other than 120/P. Fig. 12 shows the SOP structure when reordering (picture reordering) is applied.

The SOP structure shown in Fig. 12 includes a structure of L = 0, a structure of L = 1, a structure of L = 2, and a structure of L = 3. As shown in Fig. 12, Lx (x = 0, 1, 2, 3) is the following structure. Temporal ID is an identification information indicating the layer of each AU. The structure of L=x is hereinafter referred to as the Lx structure. An AU whose Temporal ID is m (a natural number greater than or equal to 0) is sometimes referred to as a picture with Temporal ID m.

- L0 structure: SOP structure composed of only a picture or pictures whose Temporal ID are 0 (i.e., the number of rows (layers) of picture included in the SOP is 1. In other words, L indicating maximum Temporal ID is 0.)
- L1 structure: SOP structure composed of a picture or pictures whose Temporal ID are 0 and a picture or pictures whose Temporal ID are 1 (i.e. the number of layers of picture included in the SOP is 2. In other words, L indicating maximum Temporal ID is 1.)
- L2 structure: SOP structure composed of a picture or pictures whose Temporal ID are 0, a picture or pictures whose Temporal ID are 1, and a picture or pictures whose Temporal ID are 2 (i.e. the number of layers of picture included in the SOP is 3. In other words, L indicating maximum Temporal ID is 2.)
- L3 structure: SOP structure composed of a picture or pictures whose Temporal ID are 0, a picture or pictures whose Temporal ID are 1, a picture or pictures whose Temporal ID are 2, and a picture or pictures whose Temporal ID are 3 (i.e. the number of layers of picture included in the SOP is 4. In other words, L indicating maximum Temporal ID is 3.)

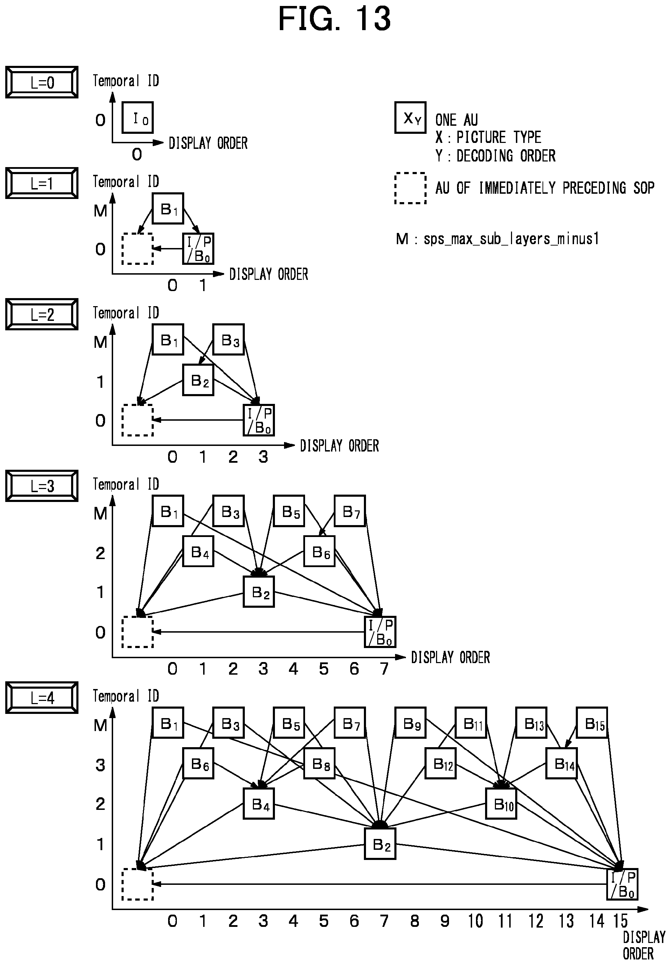

Fig. 13 is an explanatory diagram showing the SOP structure applied to a video format of 120/P. The SOP structure shown in Fig. 13 corresponds to temporal scalable coding.

The SOP structure shown in Fig. 13 includes an L0 structure, an L1 structure, an L2 structure, an L3 structure, and an L4 structure. As shown in Fig. 13, the Lx (x=0, 1, 2, 3, 4) structures are following structures.

- L0 structure: SOP structure composed of only a picture or pictures whose Temporal ID are 0 (i.e., the number of layers of picture included in the SOP is 1. In other words, L indicating maximum Temporal ID is 0.)
- L1 structure: SOP structure composed of a picture or pictures whose Temporal ID are 0 and a picture or pictures whose Temporal ID are M (i.e. the number of layers of picture included in the SOP is 2. In other words, L indicating maximum Temporal ID is 1 (or M).)
- L2 structure: SOP structure composed of a picture or pictures whose Temporal ID are 0, a picture or pictures whose Temporal ID are 1, and a picture or pictures whose Temporal ID are M (i.e. the number of layers of picture included in the SOP is 3. In other words, L indicating maximum Temporal ID is 2 (or M).)
- L3 structure: SOP structure composed of a picture or pictures whose Temporal ID are 0, a picture or pictures whose Temporal ID are 1, a picture or pictures whose Temporal ID are 2, and a picture or pictures whose Temporal ID are M (i.e. the number of layers of picture included in the SOP is 4. In other words, L indicating maximum Temporal ID is 3 (or M).)
- L4 structure: SOP structure composed of a picture or pictures whose Temporal ID are 0, a picture or pictures whose Temporal ID are 1, a picture or pictures whose Temporal ID are 2, a picture or pictures whose Temporal ID are 3, and a picture or pictures whose Temporal ID are M (i.e. the number of layers of picture included in the SOP is 5. In other words, L indicating maximum Temporal ID is 4 (or M).)

Non-patent literature 2 discloses a video coding method called VVC (Versatile Video Coding). VVC is also called ITU-T H.266. In VVC, the maximum size of the Coding Tree Unit (CTU) is extended from 64 × 64 pixels (hereinafter simply expressed as 64 × 64) in HEVC standard to 128 × 128.

In the video coding method described in non-patent literature 2, each frame of digitized video is partitioned into Coding Tree Units (CTU), and each CTU is coded.

Each CTU is partitioned into Coding Units (CU) by the Quad-Tree (QT) structure or the Multi-type tree (MMT) structure to be coded. In partitioning using the quad-tree structure, a CTU is partitioned equally in the horizontal and vertical directions. In partitioning using the multi-type tree structure, a CTU is partitioned into two or three blocks in the horizontal or vertical direction.

Each CU is predictive coded. The predictive coding includes intra-prediction and motion compensation prediction. The prediction error of each CU is transform-coded based on frequency-transforming. The motion compensation prediction is a prediction that generates a predicted image from a reconstructed image (a reference picture) whose display time is different from that of the frame to be coded. Hereinafter, the motion compensation prediction is also referred to as inter prediction.

A CU coded based on motion compensation prediction is called inter CU. A frame coded with only intra CUs is called an I-frame (or I-picture). A frame coded with not only intra CUs but also inter CUs is called a P-frame (or P-picture). A frame coded with inter CUs using not only one reference picture but also two reference pictures simultaneously for inter-prediction of a block is called a B-frame (or B-picture). The inter prediction using one reference picture is called one-directional prediction, while the inter prediction using two reference pictures simultaneously is called bi-directional prediction.

When compared at equivalent image quality, the coding volume based on the VVC standard is expected to be reduced by 30-50% compared to the coding volume based on the HEVC standard.

### Citation List

### Non-Patent Literature

NPL1: ARIB (Association of Radio Industries and Businesses) standard STD-B32 3.3 edition, July 3, 2015, Association of Radio Industries and Businesses
NPL2: Benjamin Bross, et al., "Versatile Video Coding (Draft 10)", JVET-S2001-v7, Joint Video Experts Team (JVET) of ITU-T SG16 WP3 and ISO/IEC JTC1/SC29/WG11 19th Meeting: by teleconference, 22 June - 1 July 2020

### Summary of Invention

### Technical Problem

In Figs. 12 and 13, the arrows indicate reference pictures for pictures to be coded. In other words, the arrows indicate reference relationships. For example, in the example shown in Fig. 12, in the L2 structure, the picture of fifth AU in the display order refers to the picture of third AU and the picture of seventh AU in the display order. In the L3 structure, the picture of fourth AU in the display order refers to the picture of third and the picture of fifth AU in the display order.

In this way, the picture obtained by prediction from the reference picture can be used as a further reference picture. In the hierarchical structure shown in Figs. 12 and 13, multiple lower-layer pictures (layers with smaller temporal ID values: shallower layers) can be referenced for the prediction of pictures in the higher layers (layers with larger temporal ID values: deeper layers). Such a reference relationship reduces the prediction residuals.

As mentioned above, the code volume by coding based on the VVC standard is reduced compared to that by coding based on the HEVC standard. When the SOP structure specified in non-patent literature 1 is used, the upper the layer, the higher the correlation between pictures, but even in the L4 structure, the number of layers is five of 0, 1, 2, 3, and M. Therefore, when the SOP structure is used when coding based on the VVC standard, the coding efficiency (compression efficiency) may not be as high as expected.

In the SOP structure applied to the 60/P video format, the number of layers is four of 0, 1, 2, and 3, even in the L3 structure, as illustrated in Fig. 12. In order to increase the number of layers, the L4 structure applied to the 120/P video format illustrated in Fig. 13 may be diverted. However, the L4 structure is a structure adapted to temporal scalable coding. Therefore, if the L4 structure is applied to the 60/P video format as it is, the interval between the picture to be coded that belongs to the layer of the maximum temporal ID (L4) and the reference picture (picture that belongs to the layer of temporal ID = 0 to 3) becomes large. As a result, compression efficiency is reduced.

A large interval between the picture to be coded and the reference picture means that the difference in the display order of the pictures is large. In other words, a large interval between the picture to be coded and the reference picture means that the pictures are far apart on the time axis. The interval between pictures is hereinafter referred to as the frame interval.

It is an object of the present invention to provide a video encoding device, a video decoding device, a video encoding method, a video decoding method, and a video system that does not reduce compression efficiency when coding is performed using the SOP structure.

### Solution to Problem

The video encoding device according to the present invention is a video coding device that generates a bitstream using an SOP structure that includes multiple level structures, and includes prediction means for performing a prediction process using intra-prediction or inter-prediction, and coding control means for controlling the prediction means so that under a predetermined condition that pictures in the later display order are not coded before pictures in the earlier display order and that pictures in lower layers do not refer to pictures in upper layers, the prediction means uses a picture closest in the display order to a picture to be coded as a reference picture when coding the picture referring to a picture in the lower layer.

The video decoding device according to the present invention is a video decoding device that inputs a bitstream generated using an SOP structure that includes multiple level structures and performs a decoding process, and includes prediction means for performing a prediction process using intra-prediction or inter-prediction, wherein under a predetermined condition that pictures in the later display order are not coded before pictures in the earlier display order and that pictures in lower layers do not refer to pictures in upper layers, the prediction means uses a picture closest in the display order to a picture to be coded as a reference picture when coding the picture referring to a picture in the lower layer.

The video encoding method according to the present invention is a video encoding method for generating a bitstream using an SOP structure that includes multiple level structures, and includes performing a prediction process using intra-prediction or inter-prediction, and controlling the prediction process so that under a predetermined condition that pictures in the later display order are not coded before pictures in the earlier display order and that pictures in lower layers do not refer to pictures in upper layers, a picture closest in the display order to a picture to be coded is used as a reference picture when coding the picture referring to a picture in the lower layer.

The video decoding method according to the present invention is a video decoding method for inputting a bitstream generated using an SOP structure that includes multiple level structures and performing a decoding process, and includes performing a prediction process using intra-prediction or inter-prediction, wherein in the the prediction process, under a predetermined condition that pictures in the later display order are not coded before pictures in the earlier display order and that pictures in lower layers do not refer to pictures in upper layers, using a picture closest in the display order to a picture to be coded as a reference picture when coding the picture referring to a picture in the lower layer.

The video encoding program according to the present invention is a video encoding program for generating a bitstream using an SOP structure that includes multiple level structures, and causes a computer to execute performing a prediction process using intra-prediction or inter-prediction, and controlling the prediction process so that under a predetermined condition that pictures in the later display order are not coded before pictures in the earlier display order and that pictures in lower layers do not refer to pictures in upper layers, a picture closest in the display order to a picture to be coded is used as a reference picture when coding the picture referring to a picture in the lower layer.

The video decoding program according to the present invention is a video decoding program for inputting a bitstream generated using an SOP structure that includes multiple level structures and performing a decoding process, and causes a computer to execute performing a prediction process using intra-prediction or inter-prediction, wherein in the the prediction process, under a predetermined condition that pictures in the later display order are not coded before pictures in the earlier display order and that pictures in lower layers do not refer to pictures in upper layers, using a picture closest in the display order to a picture to be coded as a reference picture when coding the picture referring to a picture in the lower layer.

The video system according to the invention includes

### Advantageous Effects of Invention

According to the present invention, when coding is performed using the SOP structure, compression efficiency is not reduced.

### Brief Description of Drawings

[Fig. 1] It depicts an explanatory diagram showing the SOP structure applied to video formats other than 120/P in the example embodiments.
[Fig. 2] It depicts an explanatory diagram showing L5 structure in the SOP structure applied to a video format of 120/P in the example embodiments.
[Fig. 3] It depicts a block diagram showing a configuration example of the example embodiment of the video encoding device.
[Fig. 4] It depicts a flowchart showing an operation of the video encoding device.
[Fig. 5] It depicts a block diagram showing a configuration example of the example embodiment of the video decoding device.
[Fig. 6] It depicts a flowchart showing an operation of the video decoding device.
[Fig. 7] It depicts a block diagram showing an example of the video system.
[Fig. 8] It depicts a block diagram showing another example of the video system.
[Fig. 9] It depicts a block diagram showing an example of a computer having a CPU.
[Fig. 10] It depicts a block diagram showing the main part of the video encoding device.
[Fig. 11] It depicts a block diagram showing the main part of the video decoding device.
[Fig. 12] It depicts an explanatory diagram showing the SOP structure applied to video formats other than 120/P.
[Fig. 13] It depicts an explanatory diagram showing L5 structure in the SOP structure applied to a video format of 120/P.

### Description of Embodiments

Hereinafter, example embodiments of the video encoding device will be explained with reference to the drawings.

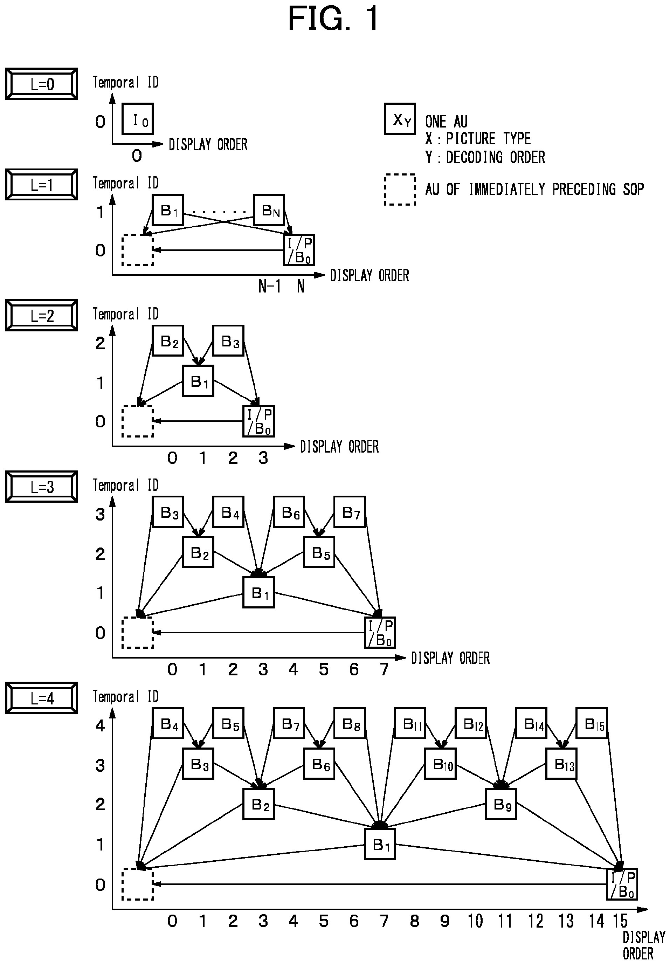

Fig. 1 is an explanatory diagram showing the SOP structure applied to video formats other than 120/P in the example embodiments. In the SOP structure shown in Fig. 1, the arrangement and reference relationship of pictures in each layer in the L0, L1, L2 and L3 structures are the same as those shown in Fig. 12. In the example embodiments, the example of a video format other than 120/P is the 60P video format to which temporal scalable coding is not applied.

In the SOP structure shown in Fig. 1, the L4 structure is added to the L0, L1, L2, and L3 structures shown in Fig. 12. The L4 structure comprises 16 pictures. The arrangement and reference relationship of the pictures in each layer in the L4 structure shown in Fig. 1 are different from those shown in Fig. 13. In the L4 structure shown in Fig. 13, in order to achieve temporal scalable coding, each picture placed in the layer of the maximum Temporal ID (L4) is coded in odd consecutive coding order (which is also the decoding order). However, in the L4 structure shown in Fig. 1, each picture is arranged without such a restriction.

In the L4 structure shown in Fig. 1, under the condition that the coding order is not reversed from the display order at each layer (pictures in the later display order are not coded before pictures in the earlier display order) and that pictures in the lower layers (layers with smaller Temporal ID values) do not refer to pictures in the upper layers (layers with larger Temporal ID values), the picture to be coded referring to a picture of the lower layer uses the picture closest in the display order to the picture to be coded as a reference picture. The fact that the coding order is not reversed from the display order means that the picture of Bₐ is always the earlier picture in the display order relative to the picture of B_{b} (a < b). In addition, the reference picture must be coded before the picture to be coded.

For example, for the layer with Temporal ID 4, the picture indicated by B₅ whose display order 2, is coded referring to the picture indicated by B₃ whose display order 1, and the picture indicated by B₂ whose display order 3. The picture indicated by B₃ and the picture indicated by B₂ are closest in the display order to the picture indicated by B₅ in the lower layers (in this example, multiple layers with Temporal IDs 0 to 3).

For the layer with Temporal ID is 3, the picture indicated by B₆ whose display order is 5 is coded referring to the picture indicated by B₂ whose display order is 3, and the picture indicated by B₁ whose display order is 7. The picture indicated by B₂ whose display order of 3 and the picture indicated by B₁ whose display order of 7 are closest in the display order to the picture indicated by B₆ in the lower layers (in this example, multiple layers with Temporal IDs 0 to 2).

The coding order in the L4 structure is not limited to the coding order shown in Fig. 1. Under the condition that the coding order is not reversed from the display order at each layer and that pictures in the lower layers do not refer to pictures in the upper layers, when the picture to be coded referring to a picture of the lower layer can use the picture closest in the display order to the picture to be coded as a reference picture, other coding orders may be used.

In this example embodiment, since the picture closest to the picture to be coded in the display order is the reference picture, the frame interval between the picture to be coded and the reference picture is smaller compared to the L4 structure in the SOP structure applied to the 120/P video format shown in Fig. 13. As a result, the compression efficiency of the picture is higher than when the L4 structure shown in Fig. 13 is used.

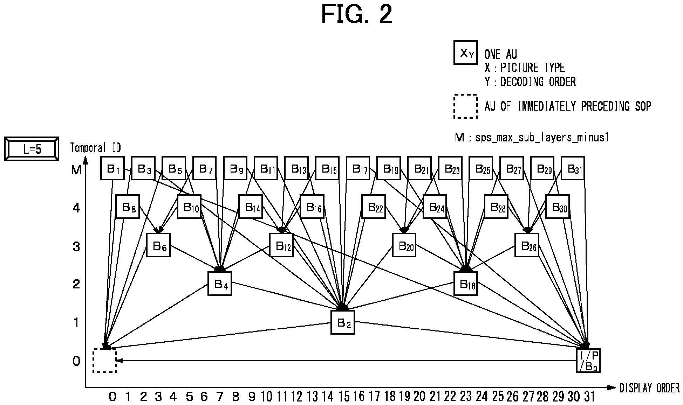

Fig. 2 is an explanatory diagram showing L5 structure in the SOP structure applied to a video format of 120/P. The L5 structure comprises 32 pictures. The SOP structure applied to the 120/P video format is also a structure that realizes temporal scalable coding in this example embodiment. Although omitted in Fig. 2, the L0, L1, L2, and L4 structures are the same as those shown in Fig. 13. In other words, the L5 structure is added to the L0, L1, L2, L3, and L4 structures shown in Fig. 13.

In the L5 structure shown in Fig. 2, the coding order and reference relationship of the pictures in the layers with Temporal ID = 0 to 4 are the same as those in the L4 structure shown in Fig. 1. However, since the L5 structure shown in Fig. 2 comprises 32 pictures, the number indicating the decoding order (which is also the coding order) in Fig. 2 is twice as large as the number indicating the decoding order in Fig. 1.

When the L5 structure in the SOP structure applied to the 120/P video format is used, the compression efficiency of the pictures belonging to the base layer (in this case, pictures in the layers with Temporal ID = 0 to 4 ) is higher, just as the compression efficiency of each layer (each picture in layer with the Temporal ID = 0 to 4) is higher when the L4 structure in the example embodiment shown in Fig. 1 is used.

The coding order in the L5 structure is not limited to the coding order shown in Fig. 2. If the picture to be coded referring to a picture of the lower layer can use the picture closest in the display order to the picture to be coded as a reference picture for layers with Temporal ID = 0 to 4 under the predetermined condition, other coding orders may be used. The predetermined condition is that the coding order is not reversed from the display order at each layer and that pictures in the lower layers do not refer to pictures in the upper layer.

The addition of the L4 structure to the SOP structure applied to the 60/P video format and the addition of the L5 structure to the SOP structure applied to the 120/P video format increase the efficiency of picture compression. This is because, since in general, a larger amount of code is allocated to the 0th picture (often the I or P picture) in the decoding order that is referenced more frequently, in the structures that include higher layers (L4 in 60/P video format, LM in 120/P video format), a frequency of occurrence of the 0th picture in the decoding order becomes to be relatively low.

### Example embodiment 1.

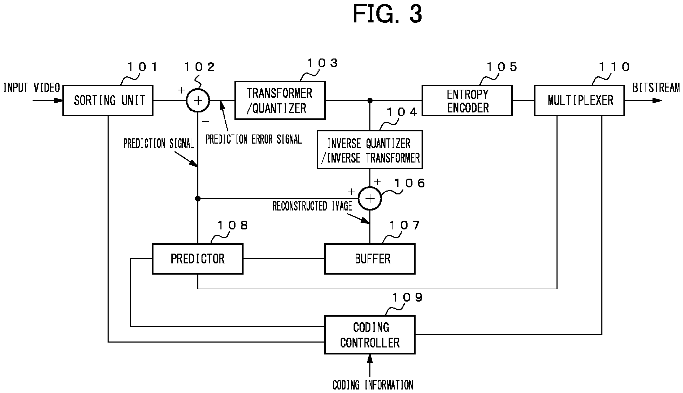

Fig. 3 is a block diagram showing a configuration example of the example embodiment of the video encoding device. The video encoding device shown in Fig. 3 includes a sorting unit 101, a subtractor 102, a transformer/quantizer 103, an inverse quantizer/inverse transformer 104, an entropy encoder 105, an adder 106, a buffer 107, a predictor 108, a coding controller 109, and a multiplexer 110. The video encoding device shown in Fig. 1 performs coding processing based on the VVC standard, but may also perform coding processing based on other standards, such as the HEVC standard, H.264/AVC standard, and MPEG (Moving Picture Experts Group)-2 standard.

The sorting unit 101 is a memory that stores each image (picture) in the video signal input in the display order. In this example embodiment, it is assumed that each picture is stored in the input order. In other words, it is assumed that each picture input in the display order is stored starting from the smallest address in the memory. However, it is also possible to store the pictures which are input in the display order in the sorting unit 101 in the coding order. In other words, each input picture may be stored in the coding order, starting from the smallest address in the memory.

Regardless of which memory storage method (display order or coding order) is adopted, each picture is read from the sorting unit 101 in the coding order. Hereinafter, a picture is sometimes referred to as an input video signal.

The sorting unit 101 is utilized when coding is performed using the SOP structure. When the SOP structure is not used, each picture in the input video signal is supplied to the subtractor 102 as is.

The subtractor 102 subtracts a prediction signal from the input video signal (specifically, pixel values) read from the sorting unit 101 to generate a prediction error signal. The prediction error signal is also called the prediction residual or prediction residual signal.

The transformer/quantizer 103 frequency-transforms the prediction error signal. Further, the transformer/quantizer 103 quantizes the frequency-transformed prediction error signal (transform coefficient). Hereinafter, the quantized transform coefficient is referred to as transform quantization value.

The entropy encoder 105 entropy-encodes the prediction parameters and the transform quantization value. The prediction parameters are information related to CTU (Coding Tree Unit) and block prediction, such as a prediction mode (intra prediction, inter prediction), an intra prediction block size, an intra prediction direction, an inter prediction block size, and a motion vector.

The multiplexer 110 multiplexes the entropy-coded data supplied by the entropy encoder 105 and the data (coding information, etc.) from the coding controller 109 to output them as a bitstream.

The predictor 108 generates a prediction signal for the input video signal. The predictor 108 generates a prediction signal based on intra-prediction or inter-prediction. That is, for each block (unit) that is a coding unit, the predictor 108 generates a prediction signal using either intra prediction or inter prediction.

The inverse quantizer/inverse transformer 104 inverse-quantizes the transform quantization values to restore the transform coefficients. Further, the inverse quantizer/inverse transformer 104 inverse-frequency-transforms the inverse quantized transform coefficients to restore the prediction error signal. The adder 106 adds the restored prediction error signal and the prediction signal to generate a reconstructed image. The reconstructed image is supplied to buffer 107. The buffer 107 stores the reconstructed image. The buffer 107 corresponds to a block memory for storing reference blocks for intra prediction and a frame memory for storing reference pictures for inter prediction.

The coding controller 109 inputs coding information from outside the video encoding device. The coding information includes the used coding method (VVC standard, HEVC standard, H.264/AVC standard, MPEG-2), test sequence information (60/P, 120/P, etc.), scalable coding availability, etc. The coding controller 109 controls each block in the video encoding device based on the coding information.

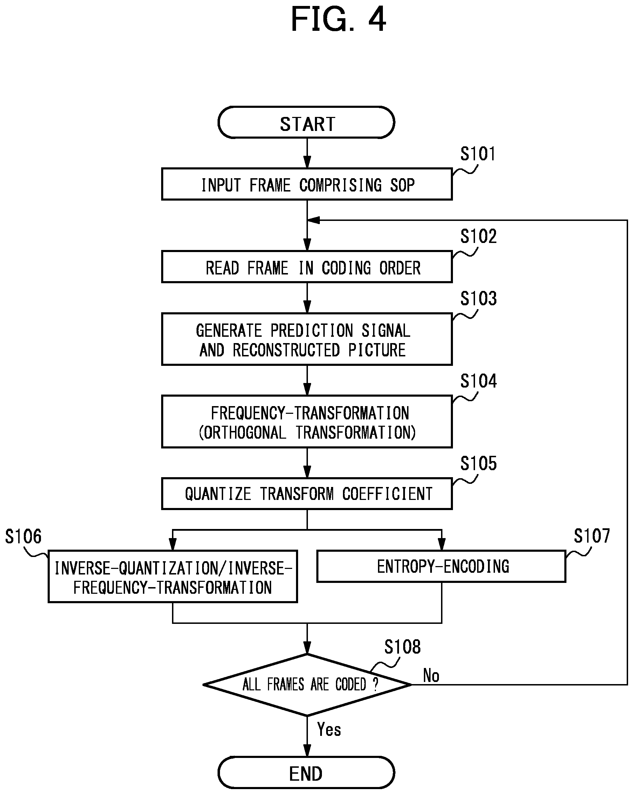

Next, an operation of the video encoding device when it performs coding using the SOP structure will be explained with reference to the flowchart in FIG. 4.

First, each picture in the video signal input in the display order is stored in the sorting unit 101 (step S101).

The sorting unit 101 outputs the pictures to the subtractor 102 sequentially in the coding order according to the instruction of the coding controller 109 (step S102).

When it is externally specified to follow the 60/P video format, the coding controller 109 controls so that the pictures are read from the sorting unit 101 in the decoding order (which is also the coding order) shown in Fig. 1. Namely, when each picture is stored in the sorting unit 101 in the display order, the coding controller 109 controls so that the picture to be coded is output from the address of the memory to be read. When each picture is stored in the sorting unit 101 in the coding order, the coding controller 109 instructs the sorting unit 101 so that when the picture is written to the sorting unit 101, the picture is stored at the address of the memory corresponding to the coding order.

When it is externally specified to follow the 120/P video format, the coding controller 109 controls so that the pictures are read from the sorting unit 101 in the decoding order shown in Fig. 12 (in the case of L0 to L4 structures) or in the decoding order shown in Fig. 2 (in the case of L5 structure).

As an example, the coding controller 109 can determine which of the L0 to L4 structures (in the case of 60/P) or which of the L0 to L5 structures (in the case of 120/P) to use, according to the situation of the scene of the video. For example, the coding controller 109 determines to use the Lx structure with a small x value for images (pictures) that constitute a scene image in which the entire screen does not move so much, and to use the Lx structure with a large x value for images that constitute a scene image in which the entire screen moves fast. In this case, a function to detect the degree of motion in the image in advance is included in the coding controller 109.

The predictor 108 generates a prediction signal for the input video signal based on intra-prediction or inter-prediction (step S103). In addition, the subtractor 102 generates a prediction error signal (step S103).

The coding controller 109 instructs the predictor 108 to perform coding according to the picture reference relationship shown in Fig. 1 (in the case of 60/P) or the picture reference relationship shown in Fig. 12 and Fig. 2 (in the case of 120/P).

The transformer/quantizer 103 frequency-transforms the prediction error signal to generate a transform coefficient (step S104). Further, the transformer/quantizer 103 quantizes the transform coefficient with a quantization step width to generate a transform quantization value (step S 105). The transform quantization value is input to the inverse quantizer/inverse transformer 104 and the entropy encoder 105.

The inverse quantizer/inverse transformer 104 inverse-quantizes the transform quantization value and inverse-frequency-transforms the inverse-quantized transform quantization value (step S 106). The entropy encoder 105 entropy-encodes (for example, arithmetic encode) the transform quantization value to generate entropy coded data (step S107).

The processes of steps S 102 to S 107 are performed for all pictures that comprise the SOP (step S108).

The multiplexer 110 multiplexes the entropy-coded data supplied by the entropy encoder 105 and the data (coding information, etc.) from the coding controller 109 to output them as a bitstream.

In this example embodiment, when the L4 structure in the SOP structure applied to video formats other than 120/P is used, under the condition that the coding order is not reversed from the display order at each layer in the L4 structure and that the pictures in the lower layers do not refer to pictures in the upper layers, the coding controller 109 controls so that the predictor 108 uses the picture closest in the display order to the picture to be coded as a reference picture when coding a picture referring to a picture in the lower layer. Such control increases the compression efficiency of each picture in the SOP. In this example embodiment, in order to achieve such control, the coding controller 109 causes the sorting unit 101 to output the pictures in the coding order shown in Fig. 1.

When the L5 structure in the SOP structure applied to the 120/P video format is used, under the condition that the coding order is not reversed from the display order at each layer with the Temporal ID = 0 to 4 in the L5 structure and that the pictures in the lower layers do not refer to pictures in the upper layers, the coding controller 109 controls the predictor 108 so that the picture to be coded referring to a picture of the lower layer uses the picture closest in the display order to the picture to be coded as a reference picture Such control increases the compression efficiency of the pictures belonging to the base layer (in this case, pictures in the layers with Temporal ID = 0 to 4). In this example embodiment, in order to achieve such control, the coding controller 109 causes the sorting unit 101 to output the pictures in the decoding order shown in Fig. 12 (in the case of the L0 to L4 structures) or in the decoding order shown in Fig. 2 (in the case of the L5 structure).

### Example embodiment 2.

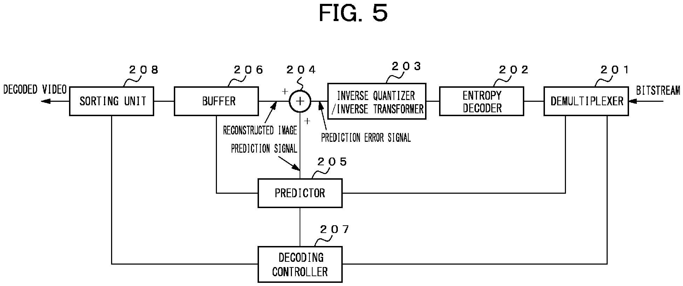

Fig. 5 is a block diagram showing a configuration example of the example embodiment of the video decoding device. The video decoding device shown in Fig. 5 includes a demultiplexer 201, an entropy decoder 202, an inverse quantizer/inverse transformer 203, an adder 204, a predictor 205, a buffer 206, a decoding controller 207, and a sorting unit 208. The video decoding device shown in Fig. 5 can receive a bit stream from the video encoding device illustrated in Fig. 3, for example.

The demultiplexer 201 demultiplexes an input bitstream and extracts entropy-coded data. It also outputs coding information etc., included in the bitstream to the decoding controller 207.

The entropy decoder 202 entropy-decodes entropy coded data. The entropy decoder 202 supplies an entropy decoded transform quantization value to inverse quantizer/inverse transformer 203. The entropy decoder 202 also supplies prediction parameters included in the bitstream to predictor 205. The entropy decoder 202 supplies the coding information included in the bitstream to the decoding controller 207.

The inverse quantizer/inverse transformer 203 inverse-quantizes the transformed quantized value. Further, the inverse quantizer/inverse transformer 203 inverse- frequency-quantizes the inverse-quantized frequency transform coefficient.

The predictor 205 generates a prediction signal for each subblock based on the prediction parameters. The prediction error signal, which is inverse-frequency-transformed by the inverse quantizer/inverse transformer 203, is added by the adder 204 to the prediction signal supplied by the predictor 205, and then supplied to the buffer 206 as a reconstructed image. The buffer 206 stores the reconstructed image.

The reconstructed images stored in buffer 206 are transferred to the sorting unit 208. The sorting unit 208 is a memory that stores each image (picture) in the video signal input in the decoding order. In this example embodiment, it is assumed that each picture is stored in the decoding order. In other words, it is assumed that each picture input in the decoding order is stored starting from the smallest address in the memory. However, each picture input in the decoding order may be stored in sorting unit 101 in the display order. In other words, each input picture may be stored in the display order, starting from the smallest address in the memory.

Regardless of which memory storage method (decoding order or display order) is employed, each picture is read from the sorting unit 208 in the display order.

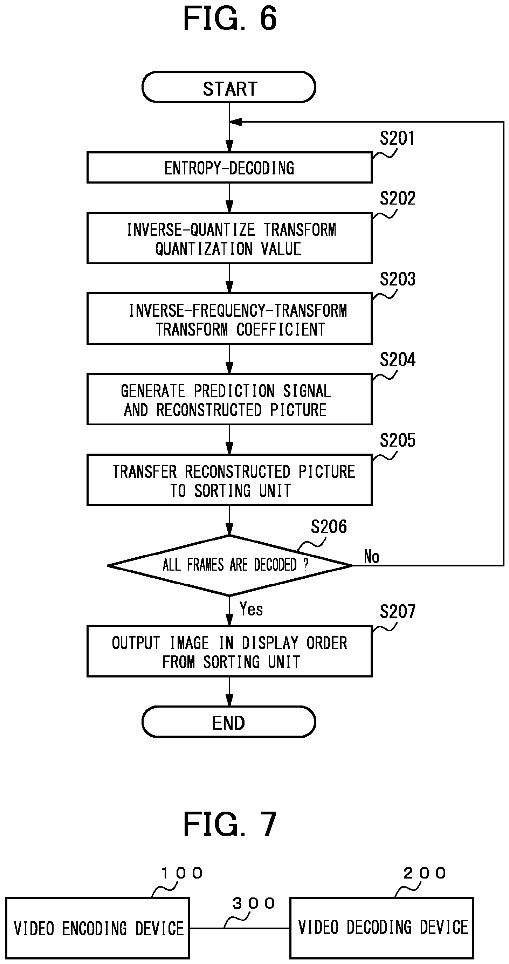

Next, an operation of the video decoding device when performing decoding using the SOP structure will be explained with reference to the flowchart in Fig. 6.

The entropy decoder 202 entropy-decodes the entropy-coded data included in the bitstream (step S201).

The inverse quantizer/inverse transformer 203 inverse-quantizes the transform quantization value by the quantization step width (step S202). Further, the inverse quantizer/inverse transformer 203 inverse-frequency-transforms the inverse-quantized frequency transform coefficient (step S203).

The predictor 205 generates a prediction signal using the reconstructed image stored in the buffer 206 (step S204). The adder 204 adds the prediction signal supplied by the predictor 205 to the prediction error signal which is inverse-frequency-transformed by the inverse quantizer/inverse transformer 203 to generate the reconstructed image (step S204). The reconstructed image is stored in the buffer 206.

The reconstructed image stored in buffer 206 is transferred to the sorting unit 208 (step S205).

The processes of steps S201 to S205 are performed for all pictures that comprise the SOP (step S206).

The sorting unit 208 outputs each image in the display order according to the output instruction of the decoding controller 207 (step S207).

When it is specified to follow the 60/P video format by the coding information, the decoding controller 207 controls so that the pictures are read from the sorting unit 101 in the display order shown in Fig. 1. Namely, when each picture is stored in the decoding order in the sorting unit 208, the decoding controller 207 controls so that the picture is output from the address of the memory to be read (the address where the picture to be read according to the display order is stored). When each picture is stored in the sorting unit 101 in the display order, the decoding controller 207 instructs the sorting unit 208 so that when the picture is written to the sorting unit 208, the picture is stored at the address of the memory in accordance with the display order.

When it is externally specified to follow the 120/P video format, the decoding controller 207 controls so that the pictures are read from the sorting unit 208 in the display order shown in Fig. 12 (in the case of the L0 to L4 structures) or in the display order shown in Fig. 2 (in the case of the L5 structure).

When receiving a bitstream based on coded data coded by the video encoding device of the first example embodiment using the SOP structure, the video decoding device can regenerate the video from the coded data with high compression efficiency for each picture.

That is, the video decoding device of this example embodiment can receive a bit stream from a video encoding device configured so that under the condition that the coding order is not reversed from the display order and that pictures in the lower layers do not refer to pictures in the upper layers, and whose prediction means uses the picture closest in the display order to the picture to be coded as a reference picture when coding the picture referring to a picture of the lower layer. When such a bitstream is received, in the video decoding device of this example embodiment, the predictor 205, under the condition that the coding order is not reversed from the display order and that pictures in the lower layers do not refer to pictures in the upper layers, can use the picture closest in the display order to the picture to be coded as a reference picture when coding the picture referring to a picture of the lower layer.

### Example embodiment 3.

Fig. 7 is a block diagram depicting an example of a video system. The video system shown in Fig. 7 is a system in which the video encoding device 100 and the video decoding device 200 in the above example embodiments are connected by a wireless transmission path or wired transmission path 300.

The configuration and operation of the video encoding device 100 is the same as the configuration and operation of the video encoding device shown in Fig. 3. The configuration and operation of the video decoding device 200 is the same as the configuration and operation of the video decoding device shown in Fig. 5.

### Example embodiment 4.

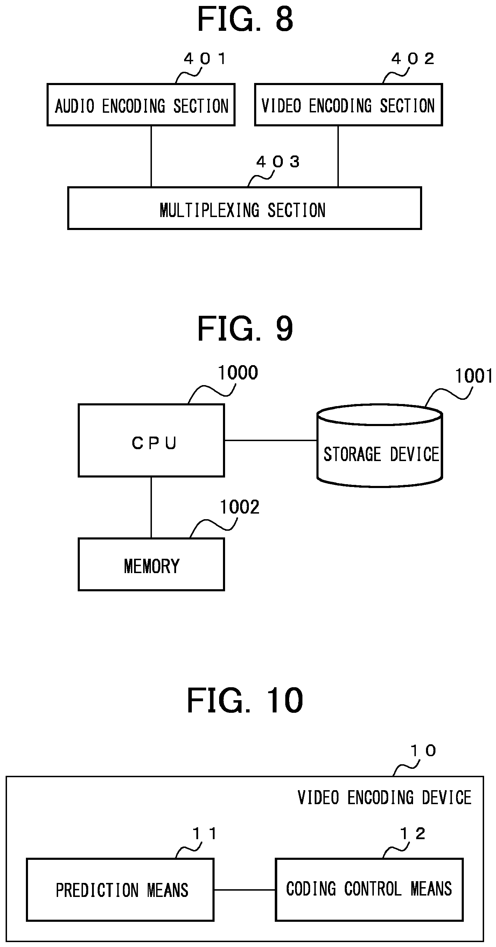

Fig. 8 is a block diagram depicting another example of the video system. The video system shown in Fig. 8 includes an audio encoding section 401, a video encoding section 402, and a multiplexing section 403.

The audio encoding section 401 encodes an audio signal in data (content) including video and audio, based on, for example, the MPEG-4 AAC (Advanced Audio Coding) standard or the MPEG-4 ALS (Audio Lossless Coding) standard defined in the ARIB STD-B32 standard, to generate and output an audio bitstream.

The video encoding section 402 is configured as shown in Fig. 3, for example and generates and outputs a video bitstream.

The multiplexing section 403 generates and outputs a bitstream by multiplexing the audio bitstream, the video bitstream, and other information based on the ARIB STD-B32 standard, for example.

Although it is possible to configure the above example embodiments by hardware, they may be realized by a computer program.

FIG. 9 is a block diagram showing an example of a computer with a CPU (Central Processing Unit). The computer is implemented in each of the video encoding device shown in Fig. 3 and the video decoding device shown in Fig. 5. The CPU 1000 executes processing in accordance with a program (video encoding program or video decoding program) stored in a storage device 1001 to realize the functions in the above example embodiments.

That is, when the computer is implemented in the video encoding device shown in Fig. 3, the CPU 1000 realizes the functions of the subtractor 102, the transformer/quantizer 103, the inverse quantizer/inverse transformer 104, the entropy encoder 105, the adder 106, the predictor 108, the coding controller 109, and the multiplexer 110 in the video encoding device.

When the computer is implemented in the video decoding device shown in Fig. 5, the CPU 1000 realizes the functions of the demultiplexer 201, the entropy decoder 202, the inverse quantizer/inverse transformer 203, the adder 204, the predictor 205, and the decoding controller 207 in the video decoding device.

The storage device 1001 is, for example, a non-transitory computer readable media. The non-transitory computer readable medium is one of various types of tangible storage media. Specific examples of the non-transitory computer readable media include a magnetic storage medium (for example, hard disk), a CD-ROM (Compact Disc-Read Only Memory), a CD-R (Compact Disc-Recordable), a CD-R/W (Compact Disc-ReWritable), and a semiconductor memory (for example, a mask ROM, a PROM (Programmable ROM), an EPROM (Erasable PROM), a flash ROM).

The program may be stored in various types of transitory computer readable media. The transitory computer readable medium is supplied with the program through, for example, a wired or wireless communication channel, i.e., through electric signals, optical signals, or electromagnetic waves.

A memory 1002 is a storage means implemented by a RAM (Random Access Memory), for example, and temporarily stores data when the CPU 1000 executes processing. It can be assumed that a program held in the storage device 1001 or a temporary computer readable medium is transferred to the memory 1002 and the CPU 1000 executes processing based on the program in the memory 1002.

The memory 1002 can be used as the sorting unit 101 and the buffer 107 shown in Fig. 3. The memory 1002 can also be used as the buffer 206 and the sorting unit 208 shown in Fig. 5.

Fig. 10 is a block diagram showing the main part of the video encoding device. The video encoding device 10 shown in Fig. 10 is a video coding device that generates a bitstream using an SOP structure that includes multiple level (for example, L0-L4, L0-L5) structures (for example, L0-L4 structure, L0-L5 structure), and comprises prediction means 11 (in the example embodiment, realized by the predictor 108) for performing a prediction process using intra-prediction or inter-prediction, and coding control means 12 (in the example embodiment, realized by the coding controller 109) for controlling the prediction means 11 so that under a predetermined condition that pictures in the later display order are not coded before pictures in the earlier display order and that pictures in lower layers do not refer to pictures in upper layers, the prediction means 11 uses a picture closest in the display order to a picture to be coded as a reference picture when coding the picture referring to a picture in the lower layer.

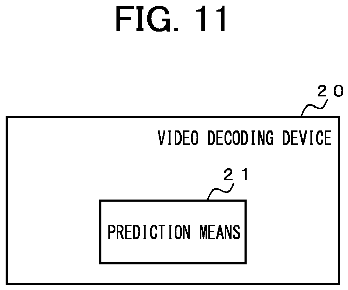

Fig. 11 is a block diagram showing the main part of the video decoding device. The video decoding device 20 shown in Fig. 11 is a video decoding device that inputs a bitstream generated using an SOP structure that includes multiple level (for example, L0-L4, L0-L5) structures (for example, L0-L4 structure, L0-L5 structure) and performs a decoding process, and comprises prediction means 21 (in the example embodiment, realized by the predictor 205) for performing a prediction process using intra-prediction or inter-prediction, wherein under a predetermined condition that pictures in the later display order are not coded before pictures in the earlier display order and that pictures in lower layers (layers with a small Temporal ID value) do not refer to pictures in upper layers (layers with a large Temporal ID value), the prediction means 21 uses a picture closest in the display order to a picture to be coded as a reference picture when coding the picture referring to a picture in the lower layer.

### Reference Signs List

- 11: prediction means
- 12: coding control means
- 21: prediction means
- 10, 100: video encoding device
- 101: sorting unit
- 102: subtractor
- 103: transformer/quantizer
- 104: inverse quantizer/inverse transformer
- 105: entropy encoder
- 106: adder
- 107: buffer
- 108: predictor
- 109: coding controller
- 110: multiplexer
- 20, 200: video decoding device
- 201: demultiplexer
- 202: entropy decoder
- 203: inverse quantizer/inverse transformer
- 204: adder
- 205: predictor
- 206: buffer
- 207: decryption control section
- 208: sorting unit
- 401: audio encoding section
- 402: video encoding section
- 403: multiplexing section
- 1000: CPU
- 1001: Storage device
- 1002: Memory

## Claims

1. A video encoding device that generates a bitstream using an SOP structure that includes multiple level structures, comprising:
prediction means for performing a prediction process using intra-prediction or inter-prediction, and
coding control means for controlling the prediction means so that under a predetermined condition that pictures in the later display order are not coded before pictures in the earlier display order and that pictures in lower layers do not refer to pictures in upper layers, the prediction means uses a picture closest in the display order to a picture to be coded as a reference picture when coding the picture referring to a picture in the lower layer.

2. The video encoding device according to claim 1, wherein
when a video signal in a video format other than 120/P is coded using L4 structure including 16 frames, the coding control means controls the prediction means so that under the predetermined condition, the prediction means uses a picture closest in the display order to the picture to be coded in the lower layers as the reference picture.

3. The video encoding device according to claim 1, wherein
when a video signal in a video format other than 120/P is coded using L5 structure including 32 frames, the coding control means controls the prediction means so that under the predetermined condition, the prediction means uses a picture closest in the display order to the picture to be coded as the reference picture when coding the picture referring to a picture in the lower layer in a base layer.

4. The video encoding device according to any one of claims 1 to 3, wherein
the prediction means performs the prediction process based on the VVC standard.

5. A video decoding device that inputs a bitstream generated using an SOP structure that includes multiple level structures and performs a decoding process, comprising
prediction means for performing a prediction process using intra-prediction or inter-prediction,
wherein under a predetermined condition that pictures in the later display order are not coded before pictures in the earlier display order and that pictures in lower layers do not refer to pictures in upper layers, the prediction means uses a picture closest in the display order to a picture to be coded as a reference picture when coding the picture referring to a picture in the lower layer.

6. A video encoding method for generating a bitstream using an SOP structure that includes multiple level structures, comprising:
performing a prediction process using intra-prediction or inter-prediction, and
controlling the prediction process so that under a predetermined condition that pictures in the later display order are not coded before pictures in the earlier display order and that pictures in lower layers do not refer to pictures in upper layers, a picture closest in the display order to a picture to be coded is used as a reference picture when coding the picture referring to a picture in the lower layer.

7. A video decoding method for inputting a bitstream generated using an SOP structure that includes multiple level structures and performing a decoding process, comprising
performing a prediction process using intra-prediction or inter-prediction,
wherein in the the prediction process, under a predetermined condition that pictures in the later display order are not coded before pictures in the earlier display order and that pictures in lower layers do not refer to pictures in upper layers, using a picture closest in the display order to a picture to be coded as a reference picture when coding the picture referring to a picture in the lower layer.

8. A video encoding program for generating a bitstream using an SOP structure that includes multiple level structures, causing a computer to execute
performing a prediction process using intra-prediction or inter-prediction, and
controlling the prediction process so that under a predetermined condition that pictures in the later display order are not coded before pictures in the earlier display order and that pictures in lower layers do not refer to pictures in upper layers, a picture closest in the display order to a picture to be coded is used as a reference picture when coding the picture referring to a picture in the lower layer.

9. A video decoding program for inputting a bitstream generated using an SOP structure that includes multiple level structures and performing a decoding process, causing a computer to execute
performing a prediction process using intra-prediction or inter-prediction,
wherein in the the prediction process, under a predetermined condition that pictures in the later display order are not coded before pictures in the earlier display order and that pictures in lower layers do not refer to pictures in upper layers, using a picture closest in the display order to a picture to be coded as a reference picture when coding the picture referring to a picture in the lower layer.

10. A video system comprising:
the video encoding device according to any one of claims 1 to 4,
an audio encoding section which codes an audio signal, and
a multiplexing section which multiplexes and outputs a bitstream from the video encoding device and a bitstream from the audio encoding section.
